# EUROPÄISCHE PATENTANMELDUNG

(11) **EP 2 837 855 A2**
(43) Veröffentlichungstag der Anmeldung: **18.02.2015**
(21) Anmeldenummer: 14179895.9
(22) Anmeldetag: 05.08.2014
(51) Int. Cl.: F16J 15/12

(54) **Dichtungsring und Dichtungsanordnung mit Dichtungsring**

(30) Priorität: 12.08.2013 DE 102013108729
(71) Anmelder: Kempchen Dichtungstechnik GmbH, 46147 Oberhausen (DE)
(72) Erfinder: Arndt, Rainer, 51381 Leverkusen (DE)
(74) Vertreter: Lorenz, Bernd Ingo Thaddeus

(57) **Zusammenfassung**

Die Erfindung betrifft einen Dichtungsring, insbesondere eine Linsendichtung (1), mit von einem metallischen Grundkörper (4) gebildeten Dichtflächen (3'), die ausgehend von einer Mittelebene (M) an zwei gegenüberliegenden Seiten des Dichtungsrings angeordnet sind. Erfindungsgemäß weist der Grundkörper (4) an jeder Seite eine gegenüber der jeweiligen Dichtfläche (3') zurückspringende Stufe auf, in welche eine Spiraldichtung (7) eingesetzt ist. Die Erfindung betrifft des Weiteren eine Dichtungsanordnung mit einer Linsendichtung (1) und zwei Flanschen (2), die einen keilförmigen Dichtungsspalt aufweisen. - Zu veröffentliche mit Fig. 1

## Beschreibung

Die vorliegende Erfindung betrifft einen Dichtungsring, insbesondere eine Linsendichtung, mit von einem metallischen Grundkörper gebildeten Dichtflächen, die ausgehend von einer Mittelebene an zwei gegenüberliegenden Seiten des Dichtungsrings angeordnet sind. Gegenstand der Erfindung ist auch eine Dichtungsanordnung mit einer Linsendichtung und zwei Flanschen, die schräg verlaufende Dichtflächen aufweisen.

Ein Dichtungsring mit den eingangs beschriebenen Merkmalen sowie eine gattungsgemäße Dichtungsanordnung sind aus der DD 4187 (dort Abbildung 4) und aus dem Produktkatalog der Kempchen Dichtungstechnik GmbH, Seiten 86 bis 88, Stand Juni 2012 bekannt. Linsendichtungen sind für den Einsatz mit Flanschen vorgesehen, die schräg verlaufende Dichtflächen aufweisen, wobei sich der Dichtungsspalt in Richtung eines Innendurchmessers der Flansche erweitert.

Aufgrund Ihrer Geometrie sind Linsendichtungen im Besonderen für die Abdichtung im Hochdruckbereich geeignet, weil ein Überdruck innerhalb der Flanschverbindung die Linsendichtung weiter gegen die Dichtflächen der Flansche drückt. Linsensdichtungen sind auch relativ unempfindlich gegenüber Überpressung. Mit zunehmender Belastung vergrößert sich nämlich die Kontaktfläche zwischen der bogenförmig, insbesondere kugeligen Linsenoberfläche und dem üblicherweise kegelförmigen Dichtungsspalt, so dass die Flächenpressung nur unterproportional ansteigt.

Als Nachteil ergibt sich bei einer Linsendichtung, dass unmittelbar an dem Innenumfang der Linsendichtung in der Regel ein Spalt zu dem angrenzenden Flansch verbleibt (vgl. Abbildung 4 der DD 4187). Um diesen Nachteil zu vermeiden, schlägt die DD 4187 die Anordnung einer Linsendichtung zwischen ebenen Flanschflächen vor. Allerdings fallen damit auch die spezifischen Vorteile der bekannten Dichtungsanordnung weg, weil die Linsendichtung dann nicht mehr in radialer Richtung komprimiert und so in einem erhöhten Maße gegen die zugeordneten Dichtflächen gepresst wird.

Des Weiteren sind Doppeldichtungssysteme bekannt, bei denen an voneinander getrennten Abschnitten eines Dichtringes eine Kammprofildichtung mit einer Weichstoffauflage in einem Krafthauptschluss und eine Spiraldichtung außenliegend in einem Kraftnebenschluss angeordnet sind, wobei zwischen den beiden Abschnitten eine Zwischenabsaugung erfolgt. Durch den für die Zwischenabsaugung vorgesehenen Bereich sind die beiden Abschnitte der Dichtung völlig getrennt voneinander angeordnet und bilden voneinander getrennte Funktionsabschnitte. Entsprechende Doppeldichtsysteme mit einer Abdichtung im Krafthauptschluss und im Kraftnebenschluss und mit einer Zwischenabsaugung sind in dem Produktkatalog Kempchen Dichtungstechnik GmbH, Seiten 109 bis 112, Stand Juni 2012, dargestellt.

Aus DE 19 08 026 U ist eine Dichtung für Flansche bekannt, welche einen metallischen Grundkörper aufweist, der einen äußeren Haltering, einen inneren Haltering und dazwischen einen ringförmigen Steg aufweist. In die zwischen den beiden Halteringen gebildete Vertiefung ist auf beiden Seiten des metallischen Grundkörpers jeweils eine Spiral-Weichstoff-Dichtung eingesetzt, welche jeweils eine Dichtfläche der Dichtung ausbildet.

Der vorliegenden Erfindung liegt die Aufgabe zugrunde, einen Dichtungsring mit den eingangs beschriebenen Merkmalen anzugeben, welcher eine verbesserte Abdichtung ermöglicht.

Gegenstand der Erfindung und Lösung der Aufgabe sind ein Dichtungsring gemäß Patentanspruch 1 sowie eine Dichtungsanordnung gemäß Patentanspruch 8.

Erfindungsgemäß ist vorgesehen, dass der Grundkörper an jeder Seite eine gegenüber der jeweiligen Dichtfläche zurückspringende Stufe aufweist, in welche eine Spiraldichtung eingesetzt ist. Erfindungsgemäß sind damit zwei gegenüberliegend angeordnete Spiraldichtungen vorgesehen, die durch die Anordnung an der zurückspringenden Stufe einen integralen Bestandteil des Dichtungsringes bilden.

Der Dichtungsring weist dabei vorzugsweise im Wesentlichen den Querschnitt einer üblichen Ganzmetall-Dichtung auf, wobei gegenüber einer herkömmlichen Ganzmetall-Dichtung durch die Bildung einer Stufe an beiden Seiten ein Bereich ausgespart wird, der für die Anordnung jeweils einer Spiraldichtung genutzt wird. Vorzugsweise ist vorgesehen, dass sich an jeder Seite die Stufe von der von dem Grundkörper gebildeten Dichtfläche bis zu einem Innenumfang des Grundkörpers erstreckt.

Im Vergleich zu den Spiraldichtungen weist der metallische Grundkörper eine hohe Stabilität und Festigkeit auf. Bei der Anordnung des Dichtungsringes zwischen zwei Flanschen erfolgt die Kraftabstützung im Wesentlichen über die Dichtflächen des Grundkörpers, so dass sich dort eine Abstützung in einem Krafthauptschluss ergibt. Die beiden an den gegenüberliegenden Stufen vorgesehenen Spiraldichtungen weisen dagegen eine erhebliche Elastizität auf und sind so in einem Kraftnebenschluss angeordnet.

Der Dichtungsring ist vorzugsweise als Linsendichtung ausgestaltet. Die von dem Grundkörper gebildeten Dichtflächen verlaufen dann in Richtung eines Außenumfanges des Grundkörpers abfallend, insbesondere bogenförmig abfallend.

Gerade bei einer Linsendichtung, die in einen keilförmigen Dichtungsspalt eingesetzt wird, ist die Elastizität der Spiraldichtung von besonderer Bedeutung. Bei dem Anziehen der Flansche wird nämlich die Linsendichtung in einem gewissen Maße radial zusammengedrückt, so dass dann die innenliegenden Spiraldichtungen auch in einen Bereich mit einem größeren Spaltabstand gedrückt werden können. Derartige Veränderungen können durch die Elastizität der Spiraldichtung ohne Weiteres ausgeglichen werden.

Die Spiraldichtung ist üblicherweise aus einem Blechstreifen, insbesondere Edelstahl, und einem Dichtstoff gewickelt. Als Dichtstoff kommen insbesondere Graphit und PTFE in Betracht.

Die Stufen weisen gemäß einer bevorzugten Ausgestaltung eine Stufenflanke und einen Stufenboden auf, wobei der Stufenboden gegenüber der Mittelebene in Richtung des Innenumfanges schräg verläuft. Der Stufenboden erstreckt sich dabei in Richtung des Innenumfanges von der Mittelebene weg, so dass bei einer Darstellung des Dichtungsringes in einem Querschnitt der Stufenboden der oberen Stufe ansteigt. Der Stufenboden verläuft dabei vorzugsweise in einem Winkel zwischen 10° und 30°, insbesondere in einem Winkel von etwa 20°. Diese Steigung entspricht der üblichen Schrägstellung der Dichtflächen von Flanschen, welche für die Aufnahme einer Linsendichtung vorgesehen sind.

Wenn die Spiraldichtung aus einem Blechstreifen mit einheitliche Breite und einem zwischen den Lagen des Blechstreifens angeordneten Dichtstoff gewickelt wird, steigt auch die außenliegende Fläche der Spiraldichtung mit dem übereinstimmenden Winkel an, wodurch der Verlauf der schräggestellten Dichtflächen der Flansche nachgebildet werden kann. Durch eine solche Anpassung der Schrägstellung des Stufenbodens und der Dichtflächen zugeordneter Flansche kann auf besonders einfache Weise eine gleichmäßige Kraftverteilung der im Kraftnebenschluss angeordneten Spiraldichtungen erreicht werden.

Die Stufenflanken verlaufen üblicherweise senkrecht zu der Mittelebene des Dichtungsringes.

Um eine gleichmäßige Anlage der Spiraldichtungen zu erreichen, stehen diese üblicherweise über die anschließenden, von dem Grundkörper gebildeten Dichtflächen vor. Die Stufen mit den daran angeordneten Spiraldichtungen erstrecken sich vorzugsweise über 20 % bis 50 % der Breite zwischen Innenumfang und Außenumfang des Dichtungsringes.

Gegenstand der Erfindung ist auch eine Dichtungsanordnung mit dem beschriebenen Dichtungsring in Form einer Linsendichtung und mit zwei Flanschen, wobei die Linsendichtung in einem von schräg verlaufenden Dichtflächen der Flansche gebildeten Dichtungsspalt angeordnet ist, der sich in Richtung eines Innendurchmessers der Flansche erweitert.

Wie zuvor beschrieben, verläuft der Stufenboden an den Stufen des Grundkörpers parallel oder in etwa parallel zu der Dichtfläche des jeweils benachbarten Flansches. Eine zumindest in etwa parallele Ausrichtung liegt im Rahmen der Erfindung vor, wenn die Abweichung weniger als 5°, vorzugsweise weniger als 3° beträgt.

Die Erfindung wird im Folgenden anhand einer lediglich ein Ausführungsbeispiel darstellenden Zeichnung erläutert. Es zeigen:
- **Fig. 1**: eine Dichtungsanordnung mit einer Linsendichtung zwischen zwei Flanschen,

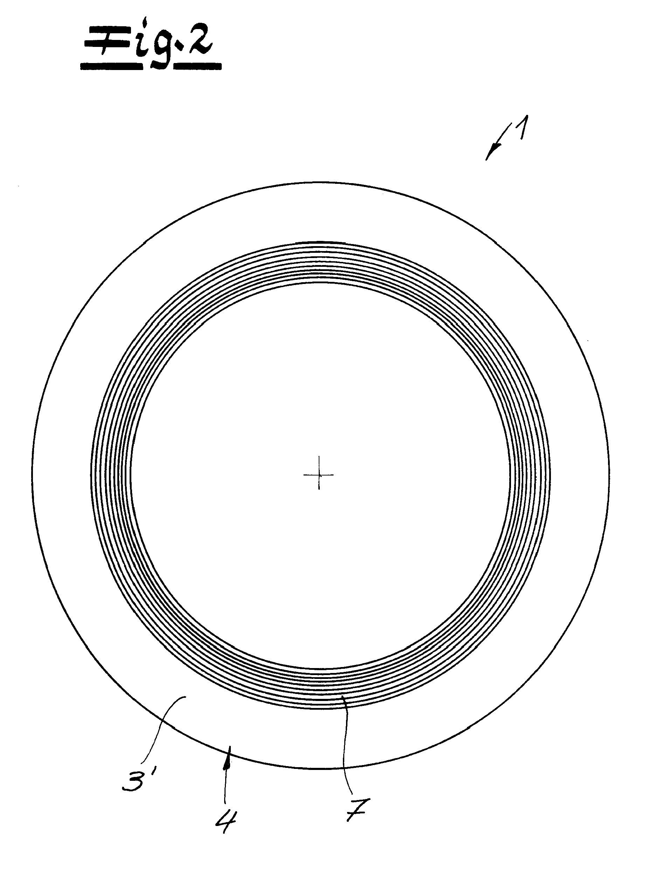

- **Fig. 2**: die Linsendichtung gemäß der Fig. 1 in einer Perspektive.

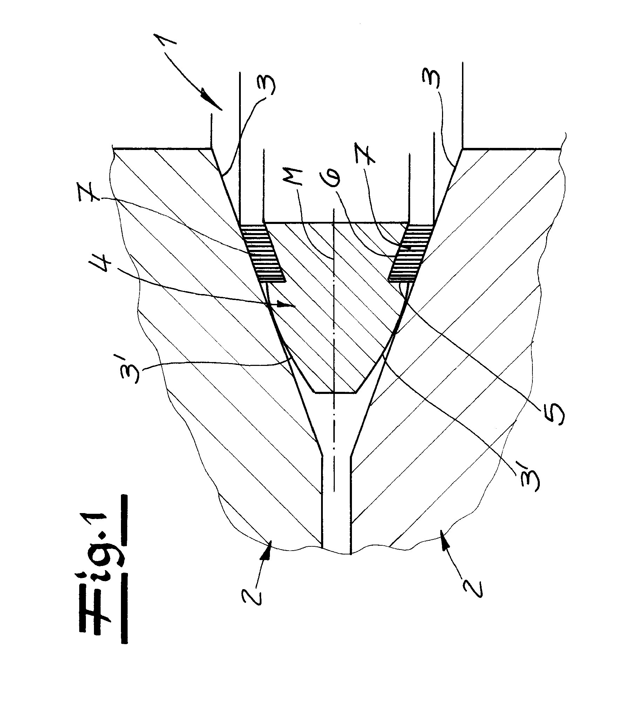

Die Fig. 1 zeigt einen Dichtungsring in Form einer Linsendichtung 1 zwischen zwei Flanschen 2 in einem Querschnitt. Ausgehend von einer Mittelebene M erweitert sich der von schräg verlaufenden Dichtflächen 3 der Flansche 2 gebildete Dichtungsspalt in Richtung eines Innenumfangs der Flansche 2 und der Linsendichtung 1. Die Dichtflächen 3 der Flansche 2 sind gegenüber der Mittelebene M keilförmig in einem Winkel von 20° angeordnet.

Gemäß der üblichen Ausgestaltung einer Linsendichtung 1 weist diese einen metallischen Grundkörper 4 auf, wobei von dem Grundkörper 4 Dichtflächen 3' gebildet sind, die bogenförmig verlaufen. Der bogenförmige Verlauf ist so gewählt, dass die Steigung der Dichtflächen 3' des Dichtungsrings in etwa der Steigung der Dichtflächen 3 der Flansche 2 entspricht. Aufgrund der unterschiedlichen Form ergibt sich nach dem Einlegen der Linsendichtung 1 in den Dichtungsspalt zunächst ein im Querschnitt punktförmiger und um den Umfang linienförmiger Kontakt zwischen den Dichtflächen 3, 3'. Bei einem Anziehen der Flansche 2 wird die Linsendichtung 1 zunächst elastisch und danach gegebenenfalls auch plastisch verformt, wobei sich der Kontakt zwischen den Dichtflächen 3, 3' vergrößert.

Um trotz der Form der Linsendichtung zu vermeiden, dass am Innenumfang der Linsendichtung eine ungeschützter Spalt verbleibt, weist der Grundkörper 4 erfindungsgemäß an jeder Seite der Mittelebene M eine gegenüber der jeweiligen Dichtfläche 3' zurückspringende Stufe mit einer Stufenflanke 5 und eine Stufenboden 6 auf, wobei in die zurückspringende Stufe eine Spiraldichtung 7 eingesetzt ist. In dem Ausführungsbeispiel ist die Stufenflanke 5 senkrecht zu der Mittelebene M ausgerichtet, während der Stufenboden 6 schräg gegenüber der Mittelebene M verläuft. Vorzugsweise ist der Stufenboden 6 jeder Stufe parallel oder in etwa parallel zu der Dichtfläche 3 des jeweils benachbarten Flansches 2.

Wenn bei einer solchen Ausgestaltung die Spiraldichtung aus einem Blechstreifen einheitlicher Breite und einem Dichtstoff mehrlagig gewickelt wird, entspricht der Verlauf der Spiraldichtung 7 seitlich der von dem Grundkörper 4 gebildeten Dichtflächen 3' dem Verlauf der Flansche 2, so dass bei einem Anziehen der Flansche 2 und einer Abstützung der Flansche 2 an dem Grundkörper 4 die senkrecht zu der Mittelebene M elastischen Spiraldichtungen gleichmäßig in einem Kraftnebenschluss angeordnet sind und so auch unmittelbar an dem Innenumfang der Linsendichtung 1 eine Korrosion oder dergleichen vermieden werden kann. Durch die Spiraldichtungen 7 wird insgesamt auch die Dichtwirkung der Linsendichtung 1 verbessert.

Um eine gleichmäßige Anlage der Spiraldichtungen zu erreichen, ist die Dicke der Spiraldichtungen 7 so gewählt, dass diese über die jeweils angrenzende Dichtfläche 3' des Grundkörpers 4 in einem geeigneten Maße hinausstehen. Die Stufe mit der daran eingesetzten Spiraldichtung 7 erstreckt sich typischerweise über 20 % bis 50 % der Breite zwischen Innenumfang und Außenumfang der Linsendichtung.

## Patentansprüche

1. Dichtungsring mit von einem metallischen Grundkörper (4) gebildeten Dichtflächen (3'), die ausgehend von einer Mittelebene (11) an zwei gegenüberliegenden Seiten des Dichtungsrings angeordnet sind, **dadurch gekennzeichnet, dass** der Grundkörper (4) an jeder Seite eine gegenüber der jeweiligen Dichtfläche (3') zurückspringende Stufe aufweist, in welche eine Spiraldichtung (7) eingesetzt ist.

2. Dichtungsring nach Anspruch 1, **dadurch gekennzeichnet, dass** sich an jeder Seite die Stufe von der von dem Grundkörper (4) gebildeten Dichtfläche (3') bis zu einem Innenumfang des Grundkörpers (4) erstreckt.

3. Dichtungsring nach Anspruch 2, **dadurch gekennzeichnet, dass** dieser als Linsendichtung (1) ausgestaltet ist, wobei die Dichtflächen (3') in Richtung eines Außenumfangs des Grundkörpers (4) abfallen.

4. Dichtungsring nach Anspruch 2 oder 3, **dadurch gekennzeichnet, dass** die Stufe eine Stufenflanke (5) und einen Stufenboden (6) aufweist, wobei der Stufenboden (6) gegenüber der Mittelebene (M) in Richtung des Innenumfangs schräg ansteigend verläuft.

5. Dichtungsring nach einem der Ansprüche 1 bis 4, **dadurch gekennzeichnet, dass** die Spiraldichtungen (7) über die zugeordneten, von dem Grundkörper (4) gebildeten Dichtflächen (3') vorstehen.

6. Dichtungsring nach einem der Ansprüche 1 bis 5, **dadurch gekennzeichnet, dass** die Spiraldichtung (7) aus einem Blechstreifen und einem Dichtstoff gewickelt ist.

7. Dichtungsring nach einem der Ansprüche 1 bis 6, **dadurch gekennzeichnet, dass** sich die Stufe über 20 % bis 50 % der Breite zwischen Innenumfang und Außenumfang erstreckt.

8. Dichtungsanordnung mit einem Dichtungsring nach einem der Ansprüche 1 bis 7 in Form einer Linsendichtung (1) und mit zwei Flanschen (2), wobei die Linsendichtung (1) in einem von schräg verlaufenden Dichtflächen (3) gebildeten Dichtungsspalt angeordnet ist, der sich in Richtung eines Innendurchmessers der Flansche (2) erweitert.

9. Dichtungsanordnung nach Anspruch 8, wobei ein Stufenboden (6) an den Stufen des Grundkörpers (4) parallel oder in etwa parallel zu der Dichtfläche (3) des jeweils benachbarten Flansches (2) verläuft.
